# EUROPÄISCHE PATENTSCHRIFT

(11) **EP 1 310 027 B1**
(45) Veröffentlichungstag und Bekanntmachung des Hinweises auf die Patenterteilung: **04.08.2004**
(21) Anmeldenummer: 01976095.8
(22) Anmeldetag: 17.08.2001
(51) Int. Cl.: H02G 1/08

(54) **VORRICHTUNG ZUR FÜHRUNG EINES BEDINGT AUF SCHUB BELASTBAREN ELEMENTES**
DEVICE FOR GUIDING AN ELEMENT WHICH CAN BE PUSHED
DISPOSITIF DE GUIDAGE D'UN ELEMENT SOLLICITE A LA POUSSEE

(30) Priorität: 19.08.2000 DE 10040693
(43) Veröffentlichungstag der Anmeldung: 14.05.2003
(73) Patentinhaber: Katimex Cielker GmbH, 54584 Jünkerath (DE)
(72) Erfinder: WEIGEL, Thomas, 53879 Euskirchen (DE)
(74) Vertreter: Wanischeck-Bergmann, Axel
(86) Internationale Anmeldenummer: PCT/EP2001/009484
(87) Internationale Veröffentlichungsnummer: WO 2002/017455

(56) Entgegenhaltungen:
- EP-A- 0 005 495
- DE-A- 3 040 760
- DE-A- 3 624 514
- DE-U- 1 977 061
- FR-A- 1 307 314
- FR-A- 2 512 597
- GB-A- 988 510
- US-A- 2 509 115
- US-A- 4 200 768

## Beschreibung

Die Erfindung betrifft eine Vorrichtung zur Führung eines in ein Leerrohr oder dergleichen einzubringendes bedingt auf Schub belastbares Element, insbesondere eines Kabels, bestehend aus einem Führungskopf, einem Kupplungselement und einem Verbindungselement zwischen dem Kupplungselement und dem Führungskopf.

Es ist aus dem Stand der Technik bekannt, Kabel oder dergleichen mit Hilfe von Kabeleinziehhilfen in Leerrohre oder dergleichen einzuziehen. Derartige Kabeleinziehhilfen bestehen aus einem biegeelastischem Stabmaterial, das in ein Ende des Leerrohres einschiebbar ist, bis es am gegenüberliegenden Ende aus dem Leerrohr austritt. Das biegeelastische Stabmaterial weist an seinem freien Ende ein Kupplungselement in Form einer Hülse mit Innengewinde auf. An dieses Kupplungselement kann ein sogenannter Kabelziehstrumpf gekuppelt werden, der aus einem netzartigen Halteelement und einem Gegenstück zum Kupplungselement des biegeelastischen Stabmaterials besteht. Das netzartige Halteelement wird über das Kabelende gestülpt und zieht sich auf Zug zu, so dass das Kabel von dem netzartigen Halteelement kraftschlüssig umschlossen wird. Derart verbunden kann das Kabel durch ein Zurückziehen des biegeelastischen Stabmaterials in das Leerrohr eingezogen werden.

Aus dem Stand der Technik sind ferner Führungsvorrichtungen bekannt, die das Einschieben des biegeelastischen Stabelementes in das Leerrohr insbesondere dann vereinfachen, wenn in dem Leerrohr schon Kabelstränge angeordnet sind. Diese Führungselemente bestehen aus einem Führungskopf, einem Kupplungselement und einem Verbindungselement, welches zwischen dem Kupplungselement und dem Führungskopf angeordnet ist. Das Kupplungselement ist entsprechend dem am Kabelziehstrumpf angeordneten Gegenstück zum Kupplungselement ausgebildet und ist demzufolge mit dem Kupplungselement am biegeelastischen Stabelement verbindbar. Das Führungselement besteht in der Regel aus einem rotationssymmetrisch ausgebildeten Körper, der ein hohes Gewicht aufweist, durch welches das Einschieben des Führungselementes in ein bereits mit Kabelsträngen besetztes Leerrohr vereinfacht wird. Als Verbindungselement ist in der Regel ein Federelement vorgesehen. Derartige Vorrichtungen haben sich im Stand der Technik bewährt. Bei sehr kurzen Leerrohrabschnitten ist die Verwendung einer Kabeleinziehhilfe aber nicht unbedingt wirtschaftlich sinnvoll, da das Einführen des biegeelastischen Stabmaterials, das Ankuppeln des Kabelziehstrumpfes und das Einziehen des Kabels mittels des biegeelastischen Stabmaterials auf kurzen Strecken einen im Vergleich zum eigentlichen Einziehvorgang verhältnismäßig hohen Zeitbedarf verursacht.

So offenbart die FR-A-2 512 597 eine Vorrichtung zum Einziehen von Kabeln in ein Leerrohr, die aus einer über ein Ende des Kabels geführten Hülse und einem mit der Hülse zu verbindendes Zugteil besteht. Das Zugteil weist einen Gewindestab auf, der in das Kabel eingedreht wird, um eine zumindest kraftschlüssige Verbindung zwischen dem Zugteil und dem Kabel herzustellen, wobei über den Gewindestab der Innenbereich des Kabels verdrängt und zwischen der Hülse und dem Gewindestab verklemmt wird. Der Zugteil weist eine Öse zum Ankuppeln eines Zugelementes auf.

Die EP-A-0 005 495 offenbart eine weitere Zugvorrichtung für Kabel, mit der ein Kabel in ein Leerrohr eingezogen werden kann. Diese vorbekannte Vorrichtung besteht aus einer Hülse, die klemmend und damit reibschlüssig an der Außenmantelfläche des Kabels befestigbar ist.

Weiterhin ist aus der FR-A-1 307 314 ein Kupplungslement zwischen zwei Kabelenden bekannt, welches zweiteilig ausgebildet ist und jedes Teil an einem Kabelende befestigt wird. So weist ein erstes Teil dieser Vorrichtung einen pilzförmigen Kopf auf, der von hakenförmigen Elementen umgriffen wird, die in gleichmäßigen Abständen zueinander in einer Halterung mit runder Öffnung beschränkt schwenkbeweglich angeordnet sind.

Aus der DE-U-1 977 061 ist eine Vorrichtung zum zugfesten Abschließen eines Fernmeldekabels durch eine über das Kabelende geschobene metallische Kappe bekannt, wobei in der Kappe ein massives korkenzieherähnliches Gebilde befestigt ist, welches in das Kabelende eindrehbar ist. An der metallischen Kappe ist außenseitig eine Öse zum Anschluss eines Zugmittels vorgesehen.

Die GB-A-988 510 zeigt einen an sich bekannten Kabelziehstrumpf mit einer federelastischen Verbindung zwischen einer Zugöse und einer Verbindungsöse am Kabelziehstrumpf.

Eine weitere Vorrichtung zur zugfesten Verkappung von Kabeln ist aus der DE-A-36 24 514 bekannt. Diese vorbekannte Vorrichtung besteht aus schrumpffähigen Teilbereichen, aus wärmerückstellfähigem Kunststoff und einer Zugöse, wobei die Teilbereiche der sich auf dem Kabelmantel auflegenden Kappeninnenflächen eine den Kontakt zwischen Kappe und Kabelmantel erhöhende Gestaltung aufweisen.

Die US-A-4 200 768 offenbart eine Kabelanordnung, die ein Kabel mit einem Außenmantel und einem offenen Ende aufweist, wobei das Kabel eine Vielzahl von Litzen aufweist, die in Längsrichtung der Ummantelung verlaufend angeordnet sind. Innerhalb der Ummantelung ist ein Element vorgesehen, das aus einem gehärteten Kunststoffmaterial besteht und mit den Litzen verbunden, insbesondere verklebt ist. An diesem Kunststoffelement ist eine Zugöse angeordnet, mit der das Kabel in ein Leerrohr eingezogen wird.

Die DE 30 40 760 A1 offenbart einen weiteren Ziehstrumpf aus Kunststoffgeflecht als Einziehhilfe für Kabel.

Die US-A-2 509 115, betrifft eine Vorrichtungsführung eines in ein Leerrohr oder dergleichen einzubringenden Elementes, welches aus einem Führungskopf, einem Kupplungselement und einem Verbindungselement zwischen dem Kupplungselement und Führungskopf besteht. Diese vorbekannte Vorrichtung dient aber der Verbindung mit einem Glasfaserstab, der an sich bereits auf Schub belastbar ist. Auch hier ist zu erkennen, dass das vorherige Einschieben eines Glasfaserstabes um anschließend das Kabel anzukuppeln bei der Erfindung nicht vorgesehen ist. Vielmehr sieht die Erfindung vor, dass die Vorrichtung unmittelbar am Kabel befestigt wird, um anschließend das Kabel ohne weitere Einziehhilfe in das Leerrohr einzuschieben.

Ausgehend von diesem Stand der Technik liegt der Erfindung daher die **Aufgabe** zugrunde, eine Vorrichtung zu schaffen, die preiswert herstellbar und an beispielsweise Kabeln in einfacher Weise ankuppelbar ist, ohne dass das Kabel eigene Kupplungselement aufweist.

Es soll demzufolge eine universell einsetzbare Vorrichtung geschaffen werden, die an eine Vielzahl unterschiedlicher Kabel anschließbar ist, ohne dass hierzu besondere Werkzeuge oder Vorrichtungen notwendig sind.

Die **Lösung** dieser Aufgabenstellung sieht vor, dass das Kupplungselement kraft- und/oder formschlüssig mit dem zu führenden Element verbindbar ist, wobei das Kupplungselement das zu führenden Element an seiner Außenfläche umgreift oder in dem zu führenden Element befestigbar ist und dass das Verbindungselement zumindest begrenzt federelatisch ausgelbildet ist und insbesondere aus einer Spiralfeder mit hoher Federkonstanten oder aus einem biegeelastischen Stab besteht.

Eine nach der erfindungsgemäßen Lehre ausgebildete Vorrichtung kann daher in einfacher Weise beispielsweise an unterschiedliche Kabel angeschlossen werden. Bei einer ersten Ausführungsform der Erfindung ist vorgesehen, dass das Kupplungselement stab- oder stiftförmig mit außenliegendem Gewindegang ausgebildet ist, so dass das stab- oder stiftförmig ausgebildete Kupplungselement mit dem außenliegenden Gewindegang in das Kabel eingeschraubt wird, bevor das Kabel dann in das Leerrohr eingeschoben wird. Die Vorrichtung ermöglicht eine gute

Führung des Kabels innerhalb des Leerrohres, insbesondere dann, wenn in Richtung der Schwerkraft gearbeitet wird. Erreicht das Kabelende mit der Vorrichtung den bestimmungsgemäßen Ausgang des Leerrohres, so kann die erfindungsgemäße Vorrichtung in einfacher Weise durch Herausschrauben vom Kabel entfernt werden. Gegebenenfalls muß vor dem Anschluß des Kabels dann lediglich noch ein kurzes Stück des Kabels, ca. 1 bis 5 cm abgeschnitten werden, um eventuell durch das Einschrauben des Kupplungselementes hervorgerufene Beschädigungen des Kabels, insbesondere im Hinblick auf Isolationswirkungen zu beseitigen.

Nach einem weiteren Merkmal der Erfindung ist vorgesehen, dass der Gewindegang selbstschneidend ausgebildet ist. Diese Ausgestaltung erleichtert die Befestigung der Vorrichtung am Kabelende, wobei es sich als vorteilhaft im Hinblick auf die notwendige Arbeitszeit zur Befestigung der Vorrichtung, erwiesen hat, wenn das Kupplungselement einen Gewindegang mit großer Steigung, beispielsweise in Form von Schnellbauschrauben oder Spanplattenschrauben aufweisen.

Alternativ zu der voranstehend beschriebenen Ausführungsform des Kupplungselementes kann dieses als Haken ausgebildet sein, der in eine Mantelfläche des zu führenden Elementes einrastbar ist. Eine weitere Ausgestaltung des Kupplungselementes sieht vor, dieses spiralförmig ohne Seele auszubilden. Ferner besteht die Möglichkeit, als Kupplungselement eine Platte mit zumindest einer Bohrung vorzusehen, in die das zu führende Element, insbesondere ein Kabel einsteckbar ist. Das Kabel wird bei entsprechender Steifigkeit reibschlüssig in der Bohrung gehalten. Eine Verbesserung der Befestigung des Kabels an der Platte kann dadurch erzielt werden, dass die Platte zwei oder mehr Löcher aufweist, durch die das Kabel gezogen wird. Die Löcher können unterschiedliche Durchmesser aufweisen, um unterschiedlich dicke Kabel aufnehmen zu können, so dass dieses Kupplungselement für eine Vielzahl von Kabelquerschnitte anwendbar ist.

Weitere Ausführungsformen von Kupplungselementen werden nachfolgend beschrieben.

Bei einer zweiten Ausführungsform der Erfindung ist vorgesehen, dass das Kupplungselement einen dem Element zugewandten Hohlraum aufweist, in dem zumindest zwei, vorzugsweise drei Greifarme beschränkt um jeweils eine Achse schwenkbar angeordnet sind, zwischen denen das Element klemmend haltbar ist. Das zu greifende Element wird bei dieser Ausführungsform zwischen die Greifarme in den Hohlraum eingeschoben, bis die Greifarme das Element umschließen und in Richtung auf das Element bewegt werden, um das Element kraftschlüssig zu greifen.

Um einen gleichmässigen Druck auf das zu haltende Element auszuüben ist vorgesehen, dass die Greifarme in gleichmässigen Abstände über die Innenfläche des Hohlraums angeordnet sind. Hierdurch wird das zu greifende Element derart mit der Vorrichtung verbunden, dass auch eine Kurvengängikeit gegeben ist, ohne dass eine Gefahr des Lösens der Vorrichtung von dem zu greifenden Element besteht.

Nach einer Weiterbildung dieser Ausführungsform ist vorgesehen, dass die Greifarme an ihren freien, dem Element zugewandten Enden Verzahnungen aufweisen, die formschlüssig mit dem Element verrastbar sind, so dass neben einer kraftschlüssigen auch eine formschlüssige Verbindung zwischen dem zu ergreifenden Element und der Vorrichtung hergestellt wird.

Für eine vereinfachte und sichere Betätigung dieser Vorrichtung ist vorgesehen, dass das Kupplungselement eine Spannhülse aufweist, die an der Außenmantelfläche des Kupplungselementes in Längsrichtung bewegbar ist und mit der die Greifarme in Richtung des Elementes bewegbar sind. Vorzugsweise weist die Spannhülse ein Innengewinde auf, welches mit einem Außengewinde auf dem Kupplungselement zusammenwirkt, um die Spannhülse in Längsrichtung des Kupplungselementes zu verschieben. Für die Betätigung der Greifarme ist vorgesehen, dass die Spannhülse an ihrem den Greifarmen zugewandten Ende einen Konus aufweist, der mit Schrägflächen der Greifarme zusammenwirkt. Durch die Verschiebung der Spannhülse gelangt das konische Ende der Spannhülse in Kontakt mit den Schrägflächen der Greifarme, so dass die Greifarme bei weiterer Bewegung der Spannhülse in Richtung auf die Greifarme aufeinander zu bewegt werden bis sie mit ausreichender Klemmkraft auf das zu greifende Element gepresst werden.

Bei einer dritten Ausführungsform der Erfindung ist vorgesehen, dass das Kupplungselement eine konische Bohrung zur reibschlüssigen Aufnahme des Elementes aufweist. Vorzugsweise ist in der Bohrung ein Innengewinde, insbesondere ein Grobgewinde angeordnet.

Eine weitere Ausgestaltung der erfindungsgemäßen Vorrichtung sieht vor, dass das Kupplungselement als Zangenfeder mit vorzugsweise drei federnden Stegen ausgebildet ist. Insbesondere ist hierbei vorgesehen, dass die Stege an ihren freien Enden aufeinanderzu ausgerichtete Schneidkanten aufweist.

Die erfindungsgemäße Vorrichtung hat daher insbesondere den Vorteil, dass sie in einfacher und schneller Weise an ein Kabel anschließbar ist, um das Einschieben des Kabels zu ermöglichen. Auf die Verwendung von Kabeleinziehhilfen in der voranstehend beschriebenen Ausgestaltung kann daher insbesondere bei kurzen Leerrohrstücken verzichtet werden, soweit das einzuziehende Kabel eine ausreichende Steifigkeit aufweist.

Es ist nach einem weiteren Merkmal der Erfindung vorgesehen, dass das Kupplungselement an seinem freien Ende als spitzer Kegel ausgebildet ist. Diese Ausgestaltung ermöglicht ein genaues zentrisches Anordnen des Kupplungselementes im Kabelquerschnitt, wobei der spitze Kegel in einfacher Weise in das Kabel vor dem Schraubvorgang eindrückbar ist.

Das Kupplungselement ist nach einem weiteren Merkmal der Erfindung zentrisch an einem rotationssymmetrisch ausgebildeten Körper angeordnet. Ein derartiger Körper ermöglicht eine sichere Lagerung und Halterung des Kupplungselementes, wobei es sich ferner als vorteilhaft erwiesen hat, den Körper zum Führungskopf hin zumindest in einem Teilbereich konisch auszubilden, so dass beim Einschieben der Vorrichtung mit dem angekuppelten Kabel in das Leerrohr der Körper aufgrund seiner geometrischen Ausgestaltung einen möglichst geringen Widerstand im Leerrohr erzeugt. Hierbei ist darauf zu achten, dass der Körper in Schubrichtung möglichst kantenfrei ausgebildet ist.

Nach einem weiteren Merkmal der Erfindung im Hinblick auf die voranstehend beschriebene Ausführungsform ist vorgesehen, dass der Körper an seinem dem Kupplungselement abgrundeten Ende eine Bohrung zur Aufnahme des Verbindungselementes aufweist. Das Verbindungselement kann in diese Bohrung formund/oder reibschlüssig eingesetzt werden. Durch diese Ausgestaltung ist eine preisgünstige Herstellung der erfindungsgemäßen Vorrichtung gewährleistet.

Das Verbindungselement ist zumindest begrenzt federelastisch ausgebildet, um den Einschiebvorgang auch im Bereich von Krümmungen des Leerrohres zu vereinfachen. Darüber hinaus ist vorgesehen, dass der Führungskopf rotationssymmetrisch ausgebildet ist, das ebenfalls einer Erleichterung des Einführungsvorganges dient.

Vorzugsweise weist der Führungskopf an einem ersten Ende eine Bohrung zur Aufnahme des Verbindungselementes auf und ist an seinem zweiten Ende konisch zulaufend ausgebildet. Die Verbindung zwischen dem Verbindungselement und dem Führungskopf kann in gleicher Weise wie die Verbindung zwischen dem Verbindungselement und dem Körper im Bereich des Kupplungselementes ausgebildet sein. Vorzugsweise ist das Verbindungselement lösbar mit dem Körper verbunden, wobei sich eine Schraubverbindung als besonders vorteilhaft erwiesen hat.

Es hat sich weiterhin als vorteilhaft erwiesen, den Führungskopf aus einem Material mit hoher Dichte und geringem Reibkoeffizient auszubilden. Beispielsweise kann der Führungskopf aus Messing bestehen und eine Oberfläche mit geringer Oberflächenrauhigkeit aufweisen, um den Einschubvorgang wesentlich zu erleichtem. Das hohe Gewicht des Führungskopfes dient hierbei insbesondere bei Einschubarbeiten in Richtung der Schwerkraft dazu, das einzuschiebende Kabel gestreckt zu halten, so dass bei dieser Arbeitsweise auch Kabel mit einer geringen Steifigkeit in ein Leerohr eingeschoben werden können.

Nach einem weiteren Merkmal der Erfindung ist vorgesehen, dass der Führungskopf im wesentlichen tropfenförmig ausgebildet ist. Die tropfenförmige Ausgestaltung des Führungskopfes hat weiterhin den Vorteil, dass auch ein Zurückziehen des Kabels im Falle einer Leerrohrverstopfung vereinfacht ist und nicht dazu führt, dass beispielsweise vorstehende Kanten des Führungskopfes im Leerrohr bzw. in darin bereits enthaltenen Kabeln verrasten, so dass ein herauszuziehendes Kabel vom Führungskopf getrennt wird. Der Führungskopf ist weiterhin lösbar, vorzugsweise verschraubbar am Verbindungselement befestigt, um unterschiedliche Führungsköpfe einsetzen zu können, beispielsweise abgestimmt auf den freien Durchmesser eines Leerrohres.

Weitere Merkmale und Vorteile der Erfindung ergeben sich aus der nachfolgenden Zeichnung sowie der dazugehörigen Beschreibung, in der bevorzugte Ausführungsformen einer erfindungsgemäßen Vorrichtung in teilweise geschnitten dargestellter Seitenansicht dargestellt sind. In der Zeichnung zeigen:
- Figur 1: eine Vorrichtung zur Führung eines bedingt auf Schub belastbaren Elementes in teilweise geschnitten dargestellter Seitenansicht;
- Figur 2: eine erste alternative Ausführungsform eines Kupplungselementes für die Vorrichtung gemäß Figur 1 in Seitenansicht;
- Figur 3: eine zweite alternative Ausführungsform eines Kupplungselementes für die Vorrichtung gemäß Figur 1 in teilweise geschnitten dargestellter Seitenansicht;
- Figur 4: eine dritte alternative Ausführungsform eines Kupplungselementes für die Vorrichtung gemäß Figur 1 in Seitenansicht;
- Figur 5: das Kupplungselement gemäß Figur 4 in einer geschnitten dargestellten Seitenansicht;
- Figur 6: eine vierte alternative Ausführungsform eines Kupplungselementes für die Vorrichtung gemäß Figur 1 in teilweise geschnitten dargestellter Seitenansicht;
- Figur 7: eine zweite Ausführungsform einer Vorrichtung zur Führung eines bedingt auf Schub belastbaren Elementes in teilweise geschnitten dargestellter Seitenansicht;
- Figur 8: eine dritte Ausführungsform einer Vorrichtung zur Führung eines bedingt auf Schub belastbaren Elementes in teilweise geschnitten dargestellter Seitenansicht;
- Figur 9: eine vierte Ausführungsform einer Vorrichtung zur Führung eines bedingt auf Schub belastbaren Elementes in Seitenansicht;
- Figur 10: eine fünfte Ausführungsform einer Vorrichtung zur Führung eines bedingt auf Schub belastbaren Elementes in teilweise geschnitten dargestellter Seitenansicht und
- Figur 11: eine sechste Ausführungsform einer Vorrichtung zur Führung eines bedingt auf Schub belastbaren Elementes in teilweise geschnitten dargestellter Seitenansicht.

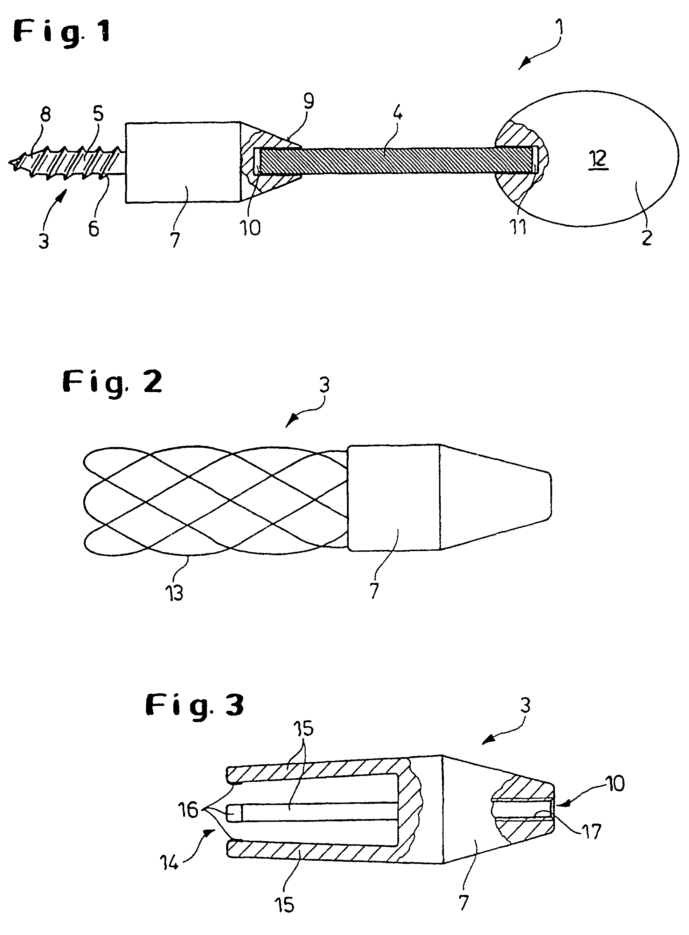

Eine in der Figur 1 dargestellte Vorrichtung 1 zur Führung eines in ein Leerrohr einzubringenden Kabels besteht aus einem Führungskopf 2, einem Kupplungselement 3 und einem Verbindungselement 4. Das Kupplungselement 3 weist einen Stab 5 auf, der einen außenliegenden Gewindegang 6 hat. Der Stab 5 ist in eine nicht näher dargestellte Bohrung eines mit dem Verbindungseelement 4 verbundenen Körpers 7 eingesetzt.

An seinem dem Körper 7 abgewandten Ende weist der Stab 5 einen spitzen Kegel 8 auf.

Der Gewindegang 6 ist selbstschneidend ausgebildet.

Der Körper 7 ist rotationssymmetrisch ausgebildet und weist an seinem dem Stab 5 abgewandten Ende einen Konus 9 auf, dessen kleinster Durchmesser im wesentlichen mit dem Durchmesser des ebenfalls rotationssymmetrisch ausgebildeten Verbindungselementes 4 im wesentlichen übereinstimmt. Das Verbindungselement 4 ist in eine Bohrung 10 im Bereich des Konus 9 eingesetzt und dort kraftschlüssig mit dem Körper 7 verbunden.

Das Verbindungselement 4 ist als Schraubenfeder mit hoher Steifigkeit ausgebildet und erstreckt sich zwischen dem Körper 7 und dem Führungskopf 2, der aus Messing besteht und rotationssymmetrisch tropfenförmig ausgebildet ist. Der Führungskopf 2 hat in seinem dem Verbindungselement 4 zugewandten Bereich eine Bohrung 11, in die das Verbindungselement 4 eingesteckt ist. Das Verbindungselement 4 ist in der Bohrung 11 in der gleichen Weise befestigt wie das Verbindungselement 4 in der Bohrung 10 im Körper 7 befestigt ist. Vorzugsweise handelt es sich hierbei um kraftschlüssige Verbindungen. Es kann aber auch eine formschlüssige Verbindung vorgesehen sein.

Die voranstehend beschriebene Vorrichtung 1 zur Führung eines in ein Leerrohr einzubringenden Kabels wird bestimmungsgemäß mit dem Kegel 8 in die Stirnfläche eines Kabels eingesetzt und durch Drehen der Vorrichtung 1 mit dem Kabel über den Gewindegang 6 verschraubt, so dass eine form- und reibschlüssige Verbindung zwischen dem Kabel und dem Kupplungselement 3 entsteht. Anschließend kann das Kabel mit der angekuppelten Vorrichtung 1 in das Leerrohr eingeschoben werden. Tritt das Kabel am bestimmungsgemäß vorgesehenen Ende des Leerrohres aus, so kann die Vorrichtung 1 von dem Kabel abgeschraubt werden. Aus Sicherheitsgründen wird dann das Kabel um einen Bereich gekürzt, der etwas größer ist als die Länge des Kupplungselementes 3, bevor das Kabel dann in üblicherweise zur Verbindung mit einem elektrischen Verbraucher oder einer elektrischen Quelle abisoliert wird.

Der Führungskopf 2 weist zu diesem Zweck eine Oberfläche 12 auf, die eine geringe Oberflächenrauhigkeit aufweist.

In den Figuren 2 bis 6 sind alternative Ausgestaltungen des Kupplungselementes 3 dargestellt.

Die Ausführungsform des Kupplungselementes 3 gemäß Figur 2 besteht aus dem Körper 7, der an seinem dem in den Figuren 2 bis 4 nicht näher dargestellten Verbindungselement 4 abgewandten Ende ein sich auf Zug zuziehendes netzförmiges Gewebe 13 aufweist. Das Gewebe 13 besteht aus einem Metalldrahtgeflecht, in welches das freie Ende des zu führenden Elementes eingeschoben wird, bevor das Gewebe 13 in Längsrichtung gestreckt wird, so dass es sich an die Mantelfläche des Elementes anlegt, In diesem Zustand wird das Element reibschlüssig im Gewebe 13 gehalten, so dass die Gefahr des unbeabsichtigten Lösen des Kupplungselementes 3 vom Element nicht besteht.

Figur 3 ist eine Ausführungsform des Kupplungselementes 3 als Zangenfeder 14 zu entnehmen. Die Zangenfeder 14 besteht aus drei federnden Stegen 15, die in gleichmässigen Abständen auf einem Kreisbogen beabstandet zueinander angeordnet sind. Zwischen benachbarten Stegen 15 ist daher jeweils ein Winkel von 120° eingeschlossen. Die Stege 15 sind einstückig mit dem Körper 7 ausgebildet.

Jeder Steg 15 weist an seinem freien Ende eine Schneidkante 16 auf, wobei die Schneidkanten 16 in Richtung auf den Innenbereich des durch die Stege 15 definierten Kreisbogen ausgerichtet ist. Die Schneidkanten 16 dienen einem formschlüssigen Eingriff in das zu führende Element, beispielsweise in die Isolation eines Kabels.

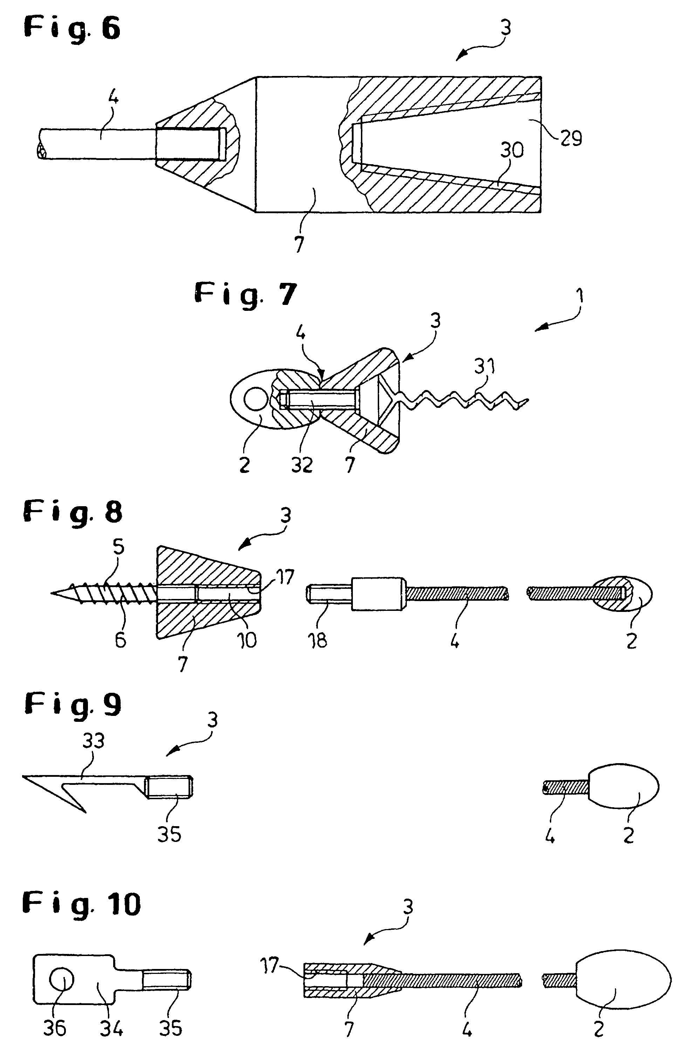

Aus Figur 3 ist ferner zu entnehmen, dass die Bohrung 10 ein Innengewinde 17 aufweist, welches mit einem Aussengewinde 18 (Figur 8) des Verbindungselementes 4 verschraubbar ist. Die Ausführungsform kann bei sämtlichen Ausgestaltungen der hier beschriebenen Kupplungselemente 3 vorgesehen sein.

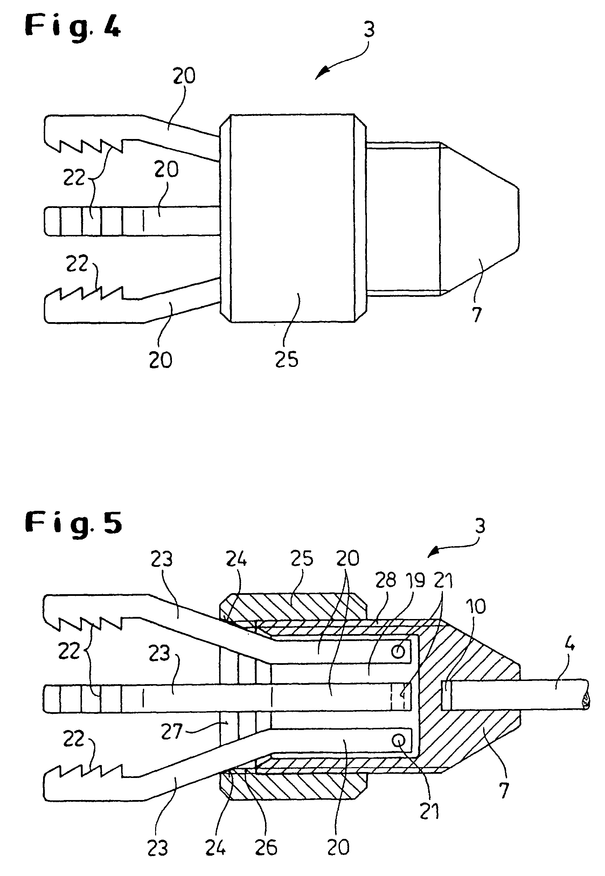

Die Figuren 4 und 5 zeigen ein Kupplungselement 3, das einen dem zu führenden Element zugewandten Hohlraum 19 aufweist, in dem drei Greifarme 20 angeordnet sind. Die Greifarme 20 sind beschränkt um jeweils eine Achse 21 verschwenkbar und auf einem Kreisbogen in gleichmässigem Abstand unter einem Winkel von 120° zueinander angeordnet. Zwischen den Greifarmen 20 ist das zu führende Element klemmend haltbar.

Die Greifarme 20 weisen zu diesem Zweck an ihren freien Ende Rastvorsprünge 22 auf, die formschlüssig in die Mantelfläche des zu führenden Elementes eindrückbar sind. Figur 5 ist ferner zu entnehmen, dass die Greifarme 20 in Form eines abgeflachten Z ausgebildet sind, wobei die freien Enden der Greifarme 20 mit den Rastvorsprüngen 22 und die an den Achsen 21 angeschlossenen Abschnitte der Greifarme 20 parallel zueinander ausgerichtet und über einen Steg 23 verbunden sind, der eine Schrägfläche 24 aufweist. Die Schrägfläche 24 ist hierbei im Bereich des den Greifarmen 20 zugewandten Endes des Körpers 7 angeordnet.

Der Körper 7 ist in einem Teilbereich von einen in Längsrichtung des Körpers 7 verschiebbar gelagerten Spannhülse 25 umgeben. Die Spannhülse 25 weist ein Innengewinde 26 und einen Konus 27 auf, wobei das Innengewinde 26 mit einem auf der Mantelfläche des Körpers 7 ausgebildeten Außengewinde 28 und der Konus 27 mit den Schrägflächen 24 der Greifarme 20 derart zusammenwirken, dass durch eine Verschiebung der Spannhülse 25 in Richtung auf die Greifarme 20 der Konus 27 in Anlage mit den Schrägflächen 24 gelangt, so dass die freien Enden der Greifarme 20 aufeinander zu bewegt werden, um das zu führende Element klemmend zu greifen.

Eine weitere Ausführungsform eines Kupplungselementes 3 ist in Figur 6 dargestellt. Dieses Kupplungselement 3 weist eine konische Bohrung 29 im Körper 7 auf, in der das zu führende Element reibschlüssig befestigt werden kann. Die Bohrung 29 hat an ihrer Innenmantelfläche ein als Grobgewinde ausgebildetes Innengewinde 30, dessen Gewindegang sich in die Außenmantelfläche des Elementes einschneiden kann.

Figur 7 zeigt eine alternative Ausgestaltung einer Vorrichtung 1 mit sehr kurzer Baulänge. Als Kupplungselement 3 ist bei dieser Ausführungsform ein Körper 7 mit einer seelenlosen Spirale 31 vorgesehen. Der Körper 7 ist über einen kurzen Stift 32 mit dem Führungskopf 2 verschraubt, wobei der Stift 32 und die Spirale 31 einstückig ausgebildet sind. Der Stfit 32 ersetzt bei dieser Ausführungsform das Verbindungselement 4 gemäß Figur 1.

Weitere Ausführungsformen der Vorrichtung 1 sind in den Figuren 8 bis 11 dargestellt. Die Ausführungsform gemäß Figur 8 unterscheidet sich von der Ausführungsform gemäß Figur 1 durch ein Schraubgewinde zwischen dem Verbindungselement 4 und dem Kupplungselement 3. Das Schraubgewinde besteht aus dem am Verbindungselement 4 angeordneten Aussengewinde 18 und dem korrespondierenden Innengewinde 17 im Körper 7 des Kupplungselementes 3.

Figur 9 zeigt ein Kupplungselement 3 in Form eines Hakens 33, der an Stelle des Stabes 5 mit dem Gewindegang 6 gemäß Figur 8 in den Körper 7 einschraubbar ist. Hierzu ist vorgesehen, dass sich die das Innengewinde 17 aufweisende Bohrung in Längsrichtung durch den Körper 7 erstreckt und beidseitig offen ausgebildet ist, um einerseits mit dem Verbindungselement 4 und andererseits mit dem Stab 5 bzw. dem Haken 33 oder einer in Figur 10 dargestellten Platte 34 verschraubt zu werden. Die Ausführungsformen gemäß den Figuren 8 bis 10 sind daher baukastenartig aufgebaut und untereinander hinsichtlich der Einzelbestandteile kompatibel ausgebildet, wobei beispielsweise auch, insbesondere hinsichtlich ihrer Größe verschiedene Führungsköpfe 2 verwendet werden können. Diese Führungsköpfe 2 können in Abhängigkeit des freien Durchgangsraumes in einem Leerrohr ausgewählt werden und erleichtern die Handhabung der erfindungsgemäßen Vorrichtung 1 in Abhängigkeit ihres Einsatzgebietes.

Stab 5, Haken 33 und Platte 34 weisen demzufolge an ihrem dem Körper 7 zuge-, wandten Ende ein mit dem Innengewinde 17 korrespondierendes Aussengewinde 35 auf.

Die in Figur 10 dargestellte Platte 34 hat eine Bohrung 36, die der Aufnahme des zu führenden Elementes, insbesondere eines Kabel ausreichender Steifigkeit dient. Durch die Knickung des Kabels kann dieses in der Bohrung 36 reibschlüssig gehalten werden.

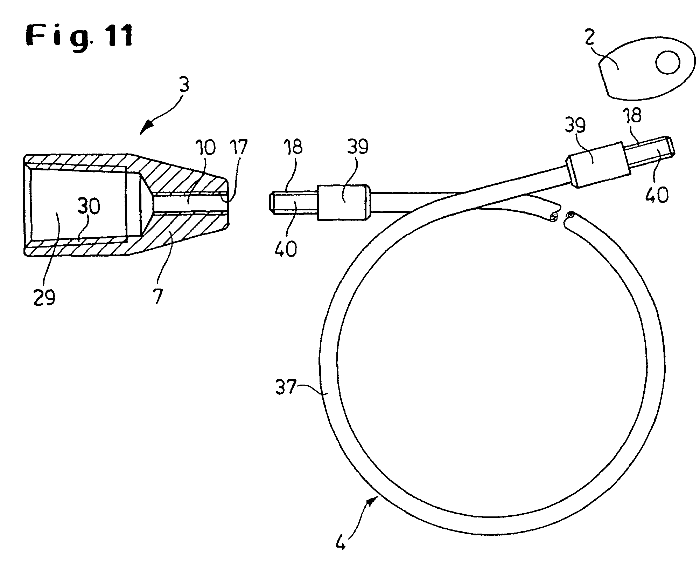

Schließlich zeigt Figur 11 eine weiter Ausführungsform der erfindungsgemäßen Vorrichtung 1, die ein Kupplungselement 3 gemäß Figur 6 aufweist. Im Unterschied zu den voranstehend beschriebenen Ausführungsformen gemäß den Figuren 1 bis 10 ist bei der Ausführungsform gemäß Figur 11 vorgesehen, dass das Verbindungelement 4 als biegeelastischer Stab 37 aus Glasfasermaterial ausgebildet ist. An beiden Enden des Stabes sind Adapter 38 angeordnet, die aus einer mit dem Stab fest verbundenen Hülse 39 und einer sich an die Hülse 39 anschließenden Gewindestange 40 besteht. Die Gewindestangen 40 weisen die Aussengewinde 18 auf, um mit dem Körper 7 bzw. mit dem Führungskopf 2 verschraubt zu werden.

## Patentansprüche

1. Vorrichtung zur Führung eines in ein Leerrohr oder dergleichen einzubringenden, bedingt auf Schub belastbaren Elementes, insbesondere eines Kabels, bestehend aus einem Führungskopf (2), einem Kupplungselement (3) und einem Verbindungselement (4) zwischen dem Kupplungselement (3) und dem Führungskopf (2),
**dadurch gekennzeichnet,**
**dass** das Kupplungselement (3) kraft- und/oder formschlüssig mit dem zu führenden Element verbindbar ist, wobei das Kupplungselement (3) das zu führende Element an seiner Außenfläche umgreift oder in dem zu führenden Element befestigbar ist und dass das Verbindungselement (4) zumindest begrenzt federelastisch ausgebildet ist und insbesondere aus einer Spiralfeder mit hoher Federkonstanten oder aus einem biegeelastischen Stab (37) besteht.

2. Vorrichtung nach Anspruch 1,
**dadurch gekennzeichnet,**
**dass** das Kupplungselement (3) stab- oder stiftförmig mit außenliegendem Gewindegang (6) ausgebildet ist.

3. Vorrichtung nach Anspruch 2,
**dadurch gekennzeichnet,**
**dass** der Gewindegang (6) selbstschneidend ausgebildet ist.

4. Vorrichtung nach Anspruch 1,
**dadurch gekennzeichnet,**
**dass** das Kupplungselement (3) als Haken (33) ausgebildet ist, der in eine Mantelfläche des zu führenden Elementes einrastbar ist.

5. Vorrichtung nach Anspruch 1,
**dadurch gekennzeichnet,**
**dass** das Kupplungselement (3) spiralförmig ohne Seele ausgebildet ist.

6. Vorrichtung nach Anspruch 1,
**dadurch gekennzeichnet,**
**dass** Kupplungselement (3) als Platte (34) mit zumindest einer Bohrung (36) ausgebildet ist, die der Aufnahme des zu führenden Elementes dient

7. Vorrichtung nach Anspruch 6,
**dadurch gekennzeichnet,**
**dass** die Platte (34) mehrere Bohrungen (36) mit vorzugsweise unterschiedlichen Durchmessern aufweist.

8. Vorrichtung nach Anspruch 1,
**dadurch gekennzeichnet,**
**dass** das Kupplungselement (3) ein sich auf Zug zuziehendes netzförmiges Gewebe (13) aufweist, welches sich an die Mantelfläche des zu führenden Elementes kraftschlüssig anlegt.

9. Vorrichtung nach Anspruch 1,
**dadurch gekennzeichnet,**
**dass** das Kupplungselement (3) einen dem Element zugewandten Hohlraum (19) aufweist, in dem zumindest zwei, vorzugsweise drei Greifarme (20) beschränkt um jeweils eine Achse (21) schwenkbar angeordnet sind, zwischen denen das Element klemmend haltbar ist.

10. Vorrichtung nach Anspruch 9,
**dadurch gekennzeichnet,**
**dass** die Greifarme (20) in gleichmäßigen Abstände über die Innenfläche des Hohlraums (19) angeordnet sind.

11. Vorrichtung nach Anspruch 9,
**dadurch gekennzeichnet,**
**dass** die Greifarme (20) an ihren freien, dem Element zugewandten Enden Rastvorsprünge (22) aufweisen, die formschlüssig mit dem Element verrastbar sind.

12. Vorrichtung nach Anspruch 9,
**dadurch gekennzeichnet,**
**dass** das Kupplungselement (3) eine Spannhülse (25) aufweist, die an der Außenmantelfläche des Kupplungselementes (3) in Längsrichtung bewegbar ist und mit der die Greifarme (20) in Richtung des Elementes bewegbar sind.

13. Vorrichtung nach Anspruch 12,
**dadurch gekennzeichnet,**
**dass** die Spannhülse (25) ein Innengewinde (26) aufweist, welches mit einem Außengewinde auf dem Kupplungselement (3) zusammenwirkt, um die Spannhülse (3) in Längsrichtung des Kupplungselementes (3) zu verschieben.

14. Vorrichtung nach Anspruch 9,
**dadurch gekennzeichnet,**
**dass** die Spannhülse (25) an ihrem den Greifarmen zugewandten Ende einen Konus (27) aufweist, der mit Schrägflächen (24) der Greifarme (20) zusammenwirkt.

15. Vorrichtung nach Anspruch 1,
**dadurch gekennzeichnet,**
**dass** das Kupplungselement (3) eine konische Bohrung (29) zur reibschlüssigen Aufnahme des Elementes aufweist.

16. Vorrichtung nach Anspruch 15,
**dadurch gekennzeichnet,**
**dass** in der Bohrung (29) ein Innengewinde (30), insbesondere ein Grobgewinde angeordnet ist.

17. Vorrichtung nach Anspruch 1,
**dadurch gekennzeichnet,**
**dass** das Kupplungselement (3) als Zangenfeder (14) mit vorzugsweise drei federnden Stegen (15) ausgebildet ist.

18. Vorrichtung nach Anspruch 17,
**dadurch gekennzeichnet,**
**dass** die Stege (15) an ihren freien Enden aufeinander zu ausgerichtete Schneidkanten (16) aufweisen.

19. Vorrichtung nach Anspruch 1,
**dadurch gekennzeichnet,**
**dass** das Kupplungselement (3) an seinem freien Ende als spitzer Kegel (8) ausgebildet ist.

20. Vorrichtung nach Anspruch 1,
**dadurch gekennzeichnet,**
**dass** das Kupplungselement (3) zentrisch an einem rotationssymmetrisch ausgebildeten Körper (7) angeordnet ist.

21. Vorrichtung nach Anspruch 20,
**dadurch gekennzeichnet,**
**dass** der Körper (7) zum Führungskopf (2) hin zumindest in einem Teilbereich konisch ausgebildet ist.

22. Vorrichtung nach Anspruch 20,
**dadurch gekennzeichnet,**
**dass** der Körper (7) an seinem dem Kupplungselement (3) abgewandten Ende eine Bohrung zur Aufnahme des Verbindungselementes (4) aufweist.

23. Vorrichtung nach Anspruch 20,
**dadurch gekennzeichnet,**
**dass** das Verbindungselement (4) lösbar mit dem Körper (7) verbunden ist.

24. Vorrichtung nach Anspruch 20,
**dadurch gekennzeichnet,**
**dass** zwischen dem Verbindungselement (4) und dem Körper (7) eine reibund/oder formschlüssige Verbindung, insbesondere eine Schraubverbindung (17, 18) ausgebildet ist.

25. Vorrichtung nach Anspruch 1,
**dadurch gekennzeichnet,**
**dass** der Führungskopf (2) rotationssymmetrisch ausgebildet ist.

26. Vorrichtung nach Anspruch 1,
**dadurch gekennzeichnet,**
**dass** der Führungskopf (2) an einem ersten Ende eine Bohrung (11) zur Aufnahme des Verbindungselementes (4) aufweist und an einem zweiten Ende konisch zulaufend ausgebildet ist.

27. Vorrichtung nach Anspruch 1,
**dadurch gekennzeichnet,**
**dass** der Führungskopf (2) aus einem Material hoher Dichte und geringem Reibkoeffizienten besteht.

28. Vorrichtung nach Anspruch 27,
**dadurch gekennzeichnet,**
**dass** der Führungskopf (2) aus Messing besteht und eine Oberfläche (12) mit geringer Oberflächenrauhigkeit aufweist.

29. Vorrichtung nach Anspruch 1,
**dadurch gekennzeichnet,**
**dass** der Führungskopf (2) im wesentlichen tropfenförmig ausgebildet ist.

30. Vorrichtung nach Anspruch 1,
**dadurch gekennzeichnet,**
**dass** der Führungskopf (2) lösbar am Verbindungselement (4) befestigt ist.

31. Vorrichtung nach Anspruch 30,
**dadurch gekennzeichnet,**
**dass** der Führungskopf (2) mit dem Verbindungselement (4) verschraubt ist.

## Claims

1. Device for guiding an element that is to be introduced in a cable duct and to which a pushing load can be applied to a certain extent, said element particularly being a cable and consisting of a guide head (2), a coupling element (3) and connecting element (4) between said coupling element (3) and guide head (2),
**characterized in**
**that** said coupling element (3) can be non-positively or positively connected to said element to be guided, with said coupling element (3) surrounding the element to be guided on the outer surface thereof or being able to be fixed within the element to be guided, and that said connecting element (4) is formed to be resilient at least to a limited extent and particularly consists of a spiral spring having a high spring constant or of an elastically bending rod (37).

2. Device according to claim 1,
**characterized in**
**that** said coupling element (3) is formed in a rod or pin shape including an external thread (6).

3. Device according to claim 2
**characterized in**
**that** said thread (6) is formed to be self-cutting.

4. Device according to claim 1,
**characterized in**
**that** said coupling element (3) is formed as a hook (33) that can catch an outer surface area of the element to be guided.

5. Device according to claim 1,
**characterized in**
**that** said coupling element (3) is formed in a spiral shape without core.

6. Device according to claim 1,
**characterized in**
**that** said coupling element (3) is formed as a plate (34) with at least one bore (36) serving to receive the element to be guided.

7. Device according to claim 6,
**characterized in**
**that** said plate (34) includes plural bores (36) which preferably have different diameters.

8. Device according to claim 1
**characterized in**
**that** said coupling element (3) includes a net-like fabric (13) necking when subject to a pull, which fabric (13) positively applies against the outer surface area of the element to be guided.

9. Device according to claim 1,
**characterized in**
**that** said coupling element (3) includes a hollow space (19) facing the element, in which hollow space at least two and preferably three grab arms (20) are arranged for limited pivoting about an axis (21), respectively, between which grab arms the element can be held in a clamping fashion.

10. Device according to claim 9,
**characterized in**
**that** said grab arms (20) are arranged at equal distances over the inner surface of said hollow space (19).

11. Device according to claim 9,
**characterized in**
**that** said grab arms (20) include on the free ends thereof facing the element locking protrusions (22) that can be locked to the element in a positive fashion.

12. Device according to claim 9,
**characterized in**
**that** said coupling element (3) includes a clamping sleeve (25) which is movable in the longitudinal direction on the outer surface area of said coupling element (3) and by means of which said grab arms (20) can be moved in the direction of the element.

13. Device according to claim 12,
**characterized in**
**that** said clamping sleeve (25) includes an internal thread (26) which cooperates with an external thread on said coupling element (3) in order to displace said clamping sleeve (3) in the longitudinal direction of said coupling element (3).

14. Device according to claim 9,
**characterized in**
**that** said clamping sleeve (25) includes on the end thereof facing said grab arms a cone (27) which cooperates with sloping surfaces (24) of said grab arms (20).

15. Device according to claim 1,
**characterized in**
**that** said coupling element (3) includes a tapered bore (29) for frictionally receiving said element.

16. Device according to claim 15,
**characterized in**
**that** within said bore (29) an internal thread (30), particularly a coarse thread, is arranged.

17. Device according to claim 1,
**characterized in**
**that** said coupling element (3) is formed as a forceps spring (14) with preferably three springy legs (15).

18. Device according to claim 17,
**characterized in**
**that** said legs (15) include on the free ends thereof cutting edges (16) which are aligned towards each another.

19. Device according to claim 1,
**characterized in**
**that** said coupling element (3) is formed on the free end thereof as a pointed cone (8).

20. Device according to claim 1,
**characterized in**
**that** said coupling element (3) is centrically arranged on a body (7) formed in a dynamically balanced fashion.

21. Device according to claim 20
**characterized in**
**that** said body (7) is conically formed towards the guide head (2), at least in a partial portion.

22. Device according to claim 20,
**characterized in**
**that** said body (7) includes on its end directed away from said coupling element (3) a bore for receiving said connecting element (4).

23. Device according to claim 20,
**characterized in**
**that** said connecting element (4) is detachably connected to said body (7).

24. Device according to claim 20,
**characterized in**
**that** between said connecting element (4) and said body (7) a frictional and/or form-fit connection, particularly a screwed connection (17, 18) is formed.

25. Device according to claim 1,
**characterized in**
**that** said guide head (2) is formed dynamically balanced.

26. Device according to claim 1,
**characterized in**
**that** said guide head (2) includes on its first end a bore (11) for receiving said connecting element (4) and is formed conically tapering on its second end.

27. Device according to claim 1,
**characterized in**
**that** said guide head (2) consists of a material having a high density and a small frictional coefficient.

28. Device according to claim 27,
**characterized in**
**that** said guide head (2) consists of brass and includes a surface (12) with a small surface roughness.

29. Device according to claim 1,
**characterized in**
**that** said guide head (2) is substantially formed in a drop-shape.

30. Device according to claim 1,
**characterized in**
**that** said guide head (2) is detachably fixed to said connecting element (4).

31. Device according to claim 30,
**characterized in**
**that** said guide head (2) is screw-connected to said connecting element (4).

## Revendications

1. Dispositif de guidage d'un élément devant être mis en place dans un tube vide ou équivalent, pouvant être relativement sollicité en poussée, en particulier d'un câble, constitué par une tête de guidage (2), un élément de couplage (3) et un élément de raccord (4) entre l'élément de couplage (3) et la tête de guidage (2),
**caractérisé en ce**
**que** l'élément de couplage (3) peut être relié par adhérence et/ou de manière crabotée à l'élément à guider, l'élément de couplage (3) enveloppant l'élément à guider sur sa surface extérieure ou pouvant être fixé dans l'élément à guider et que l'élément de raccord (4) est configuré élastique comme un ressort au moins de manière limitée et est constitué en particulier par un ressort spiral avec des constantes de rappel élevées ou par une tige pouvant être fléchie élastiquement (37).

2. Dispositif selon la revendication 1,
**caractérisé en ce**
**que** l'élément de couplage (3) est configuré en forme de tige ou de cheville avec un pas de filet (6) situé à l'extérieur.

3. Dispositif selon la revendication 2,
**caractérisé en ce**
**que** le pas de filet (6) est configuré autotaraudeur.

4. Dispositif selon la revendication 1,
**caractérisé en ce**
**que** l'élément de couplage (3) est configuré comme un crochet (33) qui peut être enclenché dans une surface de l'enveloppe de l'élément à guider.

5. Dispositif selon la revendication 1,
**caractérisé en ce**
**que** l'élément de couplage (3) est configuré en forme de spirale sans âme.

6. Dispositif selon la revendication 1,
**caractérisé en ce**
**que** l'élément de couplage (3) est configuré comme une plaque (34) avec au moins une forure (36) qui sert au logement de l'élément à guider.

7. Dispositif selon la revendication 6,
**caractérisé en ce**
**que** la plaque (34) présente plusieurs forures (36) avec des diamètres de préférence différents.

8. Dispositif selon la revendication 1,
**caractérisé en ce**
**que** l'élément de couplage (3) présente un tissu (13) réticulé se serrant à la traction qui se pose par adhérence contre la surface de l'enveloppe de l'élément à guider.

9. Dispositif selon la revendication 1,
**caractérisé en ce**
**que** l'élément de couplage (3) présente un espace creux (19) tourné vers l'élément dans lequel au moins deux, de préférence trois bras de préhension (20) sont placés pivotants de manière limitée autour de respectivement un axe (21), entre lesquels l'élément est maintenu coinçé.

10. Dispositif selon la revendication 9,
**caractérisé en ce**
**que** les bras de préhension (20) sont placés à des intervalles réguliers sur la surface intérieure de l'espace creux (19).

11. Dispositif selon la revendication 9,
**caractérisé en ce**
**que** les bras de préhension (20) présentent, à leurs extrémités libres tournées vers l'élément, des saillies à encoches (22) qui peuvent s'enclencher de manière crabotée avec l'élément.

12. Dispositif selon la revendication 9,
**caractérisé en ce**
**que** l'élément de couplage (3) présente une douille de serrage (25) qui est mobile dans le sens de la longueur sur la surface d'enveloppe extérieure de l'élément de couplage (3) et avec laquelle les bras de préhension (20) sont mobiles en direction de l'élément.

13. Dispositif selon la revendication 12,
**caractérisé en ce**
**que** la douille de serrage (25) présente un filet intérieur (26) qui coopère avec un filet extérieur sur l'élément de couplage (3) pour déplacer la douille de serrage (3) dans le sens de la longueur de l'élément de couplage (3).

14. Dispositif selon la revendication 9,
**caractérisé en ce**
**que** la douille de serrage (25) présente, à son extrémité tournée vers les bras de serrage, un cône (27) qui coopère avec des surfaces obliques (24) des bras de préhension (20).

15. Dispositif selon la revendication 1,
**caractérisé en ce**
**que** l'élément de couplage (3) présente une forure conique (29) pour le logement par friction de l'élément.

16. Dispositif selon la revendication 15,
**caractérisé en ce**
**qu'**un filet intérieur (30), en particulier un filet à pas grossier, est placé dans la forure (29).

17. Dispositif selon la revendication 1,
**caractérisé en ce**
**que** l'élément de couplage (3) est configuré comme ressort de pince (14) avec de préférence trois barrettes élastiques (15).

18. Dispositif selon la revendication 17,
**caractérisé en ce**
**que** les barrettes (15) présentent, à leurs extrémités libres, des arêtes de coupe (16) alignées l'une sur l'autre.

19. Dispositif selon la revendication 1,
**caractérisé en ce**
**que** l'élément de couplage (3) est configuré à son extrémité libre comme un cône effilé (8).

20. Dispositif selon la revendication 1,
**caractérisé en ce**
**que** l'élément de couplage (3) est placé de manière centrée sur un corps (7) configuré à rotation symétrique.

21. Dispositif selon la revendication 20,
**caractérisé en ce**
**que** le corps (7) est configuré conique vers la tête de guidage (2) au moins dans une zone partielle.

22. Dispositif selon la revendication 20,
**caractérisé en ce**
**que** le corps (7) présente, à son extrémité opposée à l'élément de couplage (3), une forure pour le logement de l'élément de raccord (4).

23. Dispositif selon la revendication 20,
**caractérisé en ce**
**que** l'élément de raccord (4) est relié amovible au corps (7).

24. Dispositif selon la revendication 20,
**caractérisé en ce**
**qu'**une jonction par friction et/ou par adhérence, en particulier un raccord à vis (17, 18) est configuré entre l'élément de raccord (4) et le corps (7).

25. Dispositif selon la revendication 1,
**caractérisé en ce**
**que** la tête de guidage (2) est configurée de rotation symétrique.

26. Dispositif selon la revendication 1,
**caractérisé en ce**
**que** la tête de guidage (2) présente, à une première extrémité, une forure (11 ) , pour le logement de l'élément de raccord (4) et est configurée en s'effilant de manière conique à une seconde extrémité.

27. Dispositif selon la revendication 1,
**caractérisé en ce**
**que** la tête de guidage (2) est constituée en un matériau à densité élevée et avec des coefficients de friction faibles.

28. Dispositif selon la revendication 27,
**caractérisé en ce**
**que** la tête de guidage (2) est en laiton et présente une surface (12) avec une faible rugosité de surface.

29. Dispositif selon la revendication 1,
**caractérisé en ce**
**que** la tête de guidage (2) est configurée substantiellement en forme de goutte.

30. Dispositif selon la revendication 1,
**caractérisé en ce**
**que** la tête de guidage (2) est fixée de manière amovible à l'élément de raccord (4).

31. Dispositif selon la revendication 30,
**caractérisé en ce**
**que** la tête de guidage (2) est vissée à l'élément de raccord (4).
